# EUROPÄISCHE PATENTSCHRIFT

(11) **EP 2 939 827 B1**
(45) Veröffentlichungstag und Bekanntmachung des Hinweises auf die Patenterteilung: **20.06.2018**
(21) Anmeldenummer: 15162858.3
(22) Anmeldetag: 08.04.2015
(51) Int. Cl.: B32B 3/06

(54) **SCHAUMSTOFFPLATTE, INSBESONDERE POLYSTYROLSCHAUMSTOFFPLATTE**
FOAM PANEL, IN PARTICULAR POLYSTYRENE FOAM PLATE
PLAQUE EN MOUSSE EN PARTICULIER PLAQUE EN MOUSSE DE POLYSTYRÈNE

(30) Priorität: 30.04.2014 DE 202014003572 U
(43) Veröffentlichungstag der Anmeldung: 04.11.2015
(73) Patentinhaber: Mostafa, Kamal, Giza (EG); Kragiopoulos, Ioannis, 60100 Katerini (GR)
(72) Erfinder: Mostafa, Kamal, Giza (EG); Kragiopoulos, Ioannis, 60100 Katerini (GR)
(74) Vertreter: Eisenführ Speiser

(56) Entgegenhaltungen:
- US-A1- 2011 076 446
- US-A1- 2013 034 700

## Beschreibung

Die Erfindung betrifft eine Schaumstoffplatte, insbesondere eine Polystyrol-Schaumstoffplatte, die zumindest aus zwei miteinander verbundenen Schaumstoffplatten ausgebildet ist, wobei einander zugewandte Berührungsflächen der beiden Schaumstoffplatten, bevorzugt stoffschlüssig, miteinander verbunden sind.

Schaumstoffplatten, wie zum Beispiel thermoplastische, expandierte Schaumstoffplatten (EPS-Platten) oder extrudierte Schaumstoffplatten (XPS-Platten) werden zum Beispiel als Dämmstoffe in der Bauindustrie eingesetzt. Mittels der auf der Aussenseite eines Bauwerkskörpers aufgebrachten Dämmstoffe sollen die stetig steigenden Anforderungen zur Einsparung von Energie erfüllt werden. Es wurde zum Beispiel versucht, über eine vergrößerte Materialstärke der hergestellten Schaumstoffplatten, die Wärmeleitfähigkeit der Schaumstoffplatten zu reduzieren. Es hat sich jedoch gezeigt, dass mit zunehmender Materialstärke der Schaumstoffplatten und der daraus resultierenden Morphologie der im Inneren der Schaumstoffplatte bei der Herstellung entstehenden Zellen, dickere Schaumstoffplatten verringerte Wärmedämmeigenschaften haben. Daher ist man dazu übergegangen, Schaumstoffplatten herzustellen, die aus mehreren dünneren untereinander verbundenen Platten erzeugt werden.

Aus EP 2 687 353 A1 oder EP 2 669 073 A1 sind thermoplastische Schaumstoffplatten, welche zumindest zweilagig ausgebildet sind, und Verfahren zu deren Herstellung bekannt. Um die Verbindung zwischen den zur Herstellung verwendeten Schaumstoffplatten zu erreichen, werden gemäß EP 2 669 073 A1 die einander zugewandten Oberflächen der Schaumstoffplatten mit Hilfe eines Klebermaterials miteinander verbunden. Um das Anhaften der miteinander zu verklebenden Schaumstoffplatten zu verbessern, ist vorgesehen, die jeweils miteinander zu verklebenden Oberflächen der beiden Schaumstoffplatten vollständig von ihrer Extrusionshaut, auch bezeichnet als Schaumhaut, zu befreien. An den von den Extrusionshäuten befreiten Oberflächen der Schaumstoffplatten soll das Klebermaterial besser anhaften können.

In EP 2 687 353 A1 ist hingegen vorgesehen, die miteinander zu verbindenden Oberflächen der beiden Schaumstoffplatten miteinander zu verschweißen. Die Oberflächen der miteinander zu verschweißenden Schaumstoffplatten werden ebenfalls vollflächig von der Extrusionshaut befreit und zusätzlich werden Vertiefungen in die von der Extrusionshaut befreite Oberfläche eingebracht. Durch die strukturierten Vertiefungen in den miteinander zu verbindenden Oberflächen soll beim thermischen Verschweißen der beiden Schaumstoffplatten untereinander die Ausbildung einer Schweißnaht vermieden werden.

US 2013/0034700 A1 zeigt einen laminierten Schaumstoffgegenstand aus zumindest zwei Schaumstoffplatten die an einander zugewandte Berührungsflächen ein Berg und Tal-Profil aufweisen, das durch Entfernen des Schaumstoffmaterials erzeugt wird. US 2011/0076446 A1 zeigt einen Polymerschaum-Gegenstand aus zumindest zwei thermoplastischen Polymerschäumen, deren einander berührende Oberflächen Perforierungen haben.

Das vollständige Entfernen der Extrusionshäute hat jedoch einen signifikanten Materialverlust zur Folge. Zudem kann es unter Umständen an beiden dünnen Schaumstoffplatten, im weiteren auch als Ausgangsplatten bezeichnet und welche zur Herstellung der mehrlagigen Schaumstoffplatte verwendet werden, aufgrund der jeweils einseitig vollflächig entfernten Extrusionshäute, zu einer Krümmung oder Wölbung der Ausgangsplatten kommen. Eine Krümmung oder Wölbung der Ausgangsplatten wirkt bei der Herstellung der mehrlagigen Schaumstoffplatte störend und kann zu einer ungleichmäßigen Verschweißung oder Verklebung im Verbindungsbereich führen.

Der vorliegenden Erfindung liegt daher die Aufgabe zugrunde, eine mehrlagige thermoplastische Schaumstoffplatte der vorbezeichneten Gattung dahingehend zu verbessern, dass der Materialverlust bei der Herstellung deutlich reduziert ist und zudem eine gleichmäßige Verbindung an den miteinander zu verbindenden Berührungsflächen der beiden Schaumstoffplatten erreicht wird.

Die Erfindung löst die ihr zugrundeliegende Aufgabe bei einer Schaumstoffplatte, insbesondere einer Polystyrol-Schaumstoffplatte, der eingangs bezeichneten Art dadurch, dass die Berührungsflächen jeweils Flächenbereiche aufweisen, welche von ihrer bei der Herstellung der beiden Schaumstoffplatten entstehenden Extrusionshaut befreit sind, und Flächenbereiche mit Extrusionshaut aufweisen, und die Berührungsflächen der Schaumstoffplatten jeweils mit Extrusionshaut versehene Randbereiche aufweisen, welche bevorzugt umlaufend ausgebildet sind.

Der Erfindung liegt die Erkenntnis zugrunde, dass die Berührungsflächen jeweils nur teilweise von ihrer bei der Herstellung der beiden Schaumstoffplatten entstehenden Extrusionshaut befreit sind. Mit Hilfe der nur teilweise entfernten Extrusionshaut an den miteinander zu verbindenden Berührungsflächen der beiden Schaumstoffplatten wird eine bevorzugt gleichmäßige Verbindung der untereinander zu verbindenden Schaumstoffplatten erreicht. Aufgrund dessen nur vorbestimmte Flächenbereiche von der Extrusionshaut befreit werden, ist der Materialverlust des Schaumstoffs deutlich reduziert. Zudem ist ein Wölben bzw. ein Krümmen der zur Herstellung verwendeten Ausgangsplatten, da diese noch Flächenbereiche mit der bei der Herstellung der Ausgangsplatten an den Oberflächen entstehenden Extrusionshaut aufweisen, auf vorteilhafte Weise vermieden. Durch die von der Extrusionshaut befreiten Flächenbereiche, auch bezeichnet als extrusionshautfreie Flächenbereiche, ist zudem eine diffusionsoffene Verbindung zwischen den beiden dünnen Ausgangsplatten erreicht, welche die zumindest zweilagige thermoplastische Schaumstoffplatte ausbilden. Die bevorzugt aus extrudiertem Polystyrol hergestellte Schaumstoffplatte (XPS-Platte) ist vorzugsweise zweilagig ausgebildet. Im Rahmen der Erfindung kann die hergestellte Schaumstoffplatte insbesondere auch drei-, vier- oder mehr als vierlagig ausgebildet sein. Dabei sind dann jeweils die Berührungsflächen von zwei miteinander zu verbindenden, dünnen als Ausgangsplatten dienenden Schaumstoffplatten jeweils nur teilweise von der Extrusionshaut befreit. Vorzugweise weist jede Berührungsfläche einer dünnen Schaumstoffplatte mindestens einen oder mehrere extrusionshautfreie Flächenbereiche auf, über die das Diffusionsvermögen zwischen zwei miteinander verbundenen Schaumstoffplatten gewährleistet wird. Durch die die Extrusionshaut umlaufend aufweisenden Randbereiche ist einer Krümmung bzw. Wölbung der dünnen Schaumstoffplatten weiter verbessert entgegengewirkt. Zudem ist durch die die Extrusionshaut aufweisenden Randbereiche der einander zugewandten Berührungsflächen gewährleistet, dass beim Fügen der Schaumstoffplatten die äußeren Randkanten der Berührungsflächen jeweils vollständig miteinander in Anlage gelangen. Durch die umlaufende Ausgestaltung der mit einer Extrusionshaut versehenen Randbereiche ist somit bewirkt, dass die extrusionshautfreien Flächenbereiche bevorzugt einen vorbestimmten Abstand zu den Randkanten der Berührungsflächen haben.

In einer bevorzugten Weiterbildung der Erfindung weisen die Berührungsflächen der miteinander verbundenen Schaumstoffplatten jeweils mehrere, voneinander separierte extrusionshautfreie Flächenbereiche auf. Mittels der zwischen den extrusionshautfreien Flächenbereichen noch stets vorhandenen Extrusionshaut wird gewährleistet, dass eine gewisse Oberflächenspannung auf der Berührungsfläche der dünnen Ausgangsplatte erhalten bleibt. Einer Krümmung oder Wölbung der als Ausgangsplatten dienenden dünnen Schaumstoffplatten wird damit sicher entgegenwirkt. Die Berührungsflächen der Ausgangsplatten weisen jeweils mindestens zwei durch einen weiterhin eine Extrusionshaut aufweisenden Flächenbereich voneinander getrennte oder separierte Flächenbereiche auf. Eine alternative Ausgestaltung der Erfindung sieht vor, dass drei, vier, fünf oder auch eine mehrstellige Anzahl an extrusionshautfreien Flächenbereichen an bevorzugt beiden Berührungsflächen der miteinander verbundenen dünnen Schaumstoffplatten vorhanden sind. Vorzugsweise wird jeder der extrusionshautfreien Flächenbereiche von einem Flächenbereich der Berührungsfläche eingegrenzt bzw. eingeschlossen, an dem die Extrusionshaut noch vorhanden ist.

Bevorzugt sind die extrusionshautfreien Flächenbereiche in vorbestimmten Abständen zueinander, bevorzugt gleichmäßig verteilt an den Berührungsflächen der beiden untereinander verbundenen Schaumstoffplatten ausgebildet. Dadurch weist die hergestellte mehrlagige, insbesondere thermoplastische Schaumstoffplatte im Verbindungsbereich der Ausgangsplatten ein über die Fläche gleichmäßig verteiltes Diffusionsvermögen auf. Zudem wird eine gleichmäßige Verteilung der Flächenspannung in den Ebenen der miteinander verbundenen Berührungsflächen bewirkt, insbesondere in Quer- und Längsrichtung der Berührungsflächen. Einer möglichen Krümmung bzw. Wölbung der dünnen Schaumstoffplatten wird somit nach dem teilweisen Entfernen der Extrusionshaut verbessert entgegengewirkt. Dabei erfolgt das Entfernen der Extrusionshaut in den voneinander getrennten Flächenbereichen stets, bevor die als Ausgangsplatten dienenden dünnen extrudierten Polystyrol-Schaumstoffplatten zu der dicken, mehrlagigen Schaumstoffplatte verbunden werden.

Bevorzugt sind die einander zugewandten Berührungsflächen der beiden Schaumstoffplatten mit ihren extrusionshautfreien Flächenbereichen zueinander deckungsgleich angeordnet. Mit dem deckungsgleichen Anordnen der extrusionshautfreien Flächen ist an den Berührungsflächen der miteinander verbundenen Ausgangsplatten bewirkt, dass ein extrusionshautfreier Flächenbereich der einen dünnen Schaumstoffplatte nicht durch einen Flächenbereich der Berührungsfläche der jeweils anderen dünnen Schaumstoffplatte zumindest teilweise abgedeckt wird, welcher noch eine Extrusionshaut aufweist. Dadurch kann die Diffusionsfähigkeit zwischen den beiden dünnen Schaumstoffplatten sichergestellt werden. Bevorzugt weisen die Berührungsflächen beider Ausgangsplatten achssymmetrische Muster oder Anordnungen der daran ausgebildeten extrusionshautfreien Flächenbereiche auf.

Vorzugsweise weist jeder extrusionshautfreie Flächenbereich eine äußere Form auf, vorzugsweise ausgewählt aus der Gruppe bestehend aus im wesentlich rechteckig, oval oder kreisförmig. Die extrusionshautfreien Flächenbereiche weisen somit jeweils eine bestimmte Form auf, wodurch die Ausbildung eines vorbestimmten Musters und damit die bevorzugt deckungsgleiche Anordnung der extrusionshautfreien Flächenbereiche der aufeinander zu liegen kommenden Berührungsflächen sichergestellt werden kann. Zudem lassen sich im Wesentlichen rechteckige, ovale oder kreisförmige Flächenbereiche an den Berührungsfläche der Schaumstoffplatten auf einfache Weise erzeugen.

Gemäß einer anderen bevorzugten Weiterbildung der Erfindung ist vorgesehen, dass die Berührungsflächen jeweils zwischen den bevorzugt in gleichmäßigen Abständen zueinander angeordneten extrusionshautfreien Flächenbereichen ein oder mehrere sich von einer Randkante zu einer bevorzugt gegenüberliegenden Randkante der Berührungsfläche, bevorzugt durchgängig erstreckende Extrusionshautstreifen aufweisen. Mit Hilfe der vorzugsweise durchgängig ausgebildeten bzw. durchlaufenden Extrusionshautstreifen von einer Randkante zu einer gegenüberliegenden Randkante der Berührungsfläche lassen sich die Flächenspannungen in den Ebene der Berührungsflächen sicher aufrecht halten. Mit den vorzugsweise durchgängigen bzw. durchlaufenden Extrusionshautstreifen werden die Flächenspannungen entlang der Oberflächen der einander zugewandten Berührungsflächen der Ausgangsplatten auf vorteilhafte Weise ununterbrochen übertragen. Bevorzugt verlaufen die Extrusionshautstreifen jeweils in beide Hauptrichtungen der Berührungsflächen der vorzugsweise eine rechteckige Grundform aufweisenden dünnen Schaumstoffplatten.

Bevorzugt verlaufen die Extrusionshautstreifen, welche sich zwischen einander gegenüberliegenden Randkanten erstrecken, parallel zueinander und/oder die Extrusionshautstreifen, welche an einander benachbarten Randkanten auslaufen, verlaufen im Wesentlichen rechtwinklig zueinander. Die zwischen den extrusionshautfreien Flächenbereichen verlaufenden Extrusionshautstreifen sind in diesem Zusammenhang dazu eingerichtet, jeweils Schnittpunkte an den Berührungsflächen der Ausgangsplatten auszubilden. In den Hauptrichtungen der insbesondere eine Quaderform aufweisenden dünnen Schaumstoffplatten verlaufen jeweils eine Vielzahl an Extrusionshautstreifen, so dass eine Vielzahl an Schnittpunkten entstehen. Die bevorzugt rechtwinklig zueinander verlaufenden Extrusionshautstreifen sind über die Schnittpunkte vorzugsweise untereinander verbunden und bilden jeweils eine gitterartige Anordnung an den Berührungsflächen der Ausgangsplatten aus. Flächenspannungen, welche durch die Wölbung bzw. Krümmung der einzelnen Schaumstoffplatten bewirkt werden, werden über die Vielzahl der ausgebildeten Schnittpunkte gleichmäßig über die gesamte Berührungsfläche der Schaumstoffplatten verteilt. Die Schnittpunkte sind zudem an den Berührungsflächen der miteinander verbundenen Schaumstoffplatten bevorzugt gleichmäßig verteilt angeordnet. Vorzugsweise weisen die in eine Hauptrichtung parallel zueinander ausgerichteten Extrusionshautstreifen und die dazu insbesondere quer verlaufenden Extrusionshautstreifen vorbestimmte Abstände zueinander auf. Die Bereiche zwischen den gitterartig zueinander verlaufenden bzw. die Form eines Gitters aufweisenden Extrusionshautstreifen bilden die extrusionshautfreien Flächenbereiche der jeweiligen Berührungsflächen der Schaumstoffplatten aus.

In einer anderen Ausführung der Erfindung sind die einander zugewandten Berührungsflächen der Schaumstoffplatten bereichsweise oder vollständig mittels eines Klebermaterials miteinander verbunden. Der Einsatz eines Klebermaterials stellt eine vorteilhaft einfache Möglichkeit zur Ausbildung einer Stoffschlussverbindung zwischen den miteinander zu verbindenden Berührungsflächen der dünnen Schaumstoffplatten dar. Als Klebermaterial wird bevorzugt ein diffusionsoffener Kleber verwendet. Bei einer vorzugsweise vollflächig erfolgten Verbindung der Berührungsflächen der Ausgangsplatten wird somit durch das aufgetragene Klebermaterial im Verbindungsbereich der extrusionshautfreien Flächenbereiche das Diffusionsvermögen zwischen den Schaumstoffplatten nicht beeinträchtigt. Als diffusionsoffener Kleber kann beispielsweise ein Hot-Melt-Kleber und/oder ein Reaktionskleber eingesetzt werden. Das Klebermaterial setzt die Diffusionsfähigkeit der bevorzugt zum Einsatz kommenden extrudierten Schaumstoffplatten um nicht mehr als 50 %, vorzugsweise nicht mehr als 20 % herab.

Gemäß einer anderen Weiterbildung der Erfindung ist vorgesehen, dass die Berührungsflächen der Schaumstoffplatten über ihre an den Berührungsflächen ausgebildeten Extrusionshautstreifen miteinander verbunden sind. Zwischen den extrusionshautfreien Flächenbereichen der Berührungsflächen sind somit keine Kleberbestandteile vorhanden, weshalb die Diffusionsfähigkeit im Bereich der extrusionshautfreien Flächenbereiche unbeeinflusst ist. Aufgrund der gitterartigen Anordnung der Extrusionshautstreifen ist eine gleichmäßige Stoffschlussverbindung über die Gesamtfläche der miteinander verbundenen Berührungsflächen erreicht. Zudem wird über die an den Randbereichen der Berührungsfläche bevorzugt umlaufend ausgebildete Extrusionshaut eine vollständig geschlossene Verbindung an der äußeren Konturen der mehrlagigen Schaumstoffplatte erzeugt. Ein ungewolltes Lösen der untereinander verbundenen, dünnen Ausgangsplatten ist somit vermieden. Durch das die Ausgangsplatten nur bereichsweise miteinander verbindende Klebermaterial ist der Mengenbedarf an Klebermaterial reduziert. Zum einen kann das Eigengewicht der herzustellenden Schaumstoffplatte und zum anderen die Kosten für die Herstellung der erfindungsgemäßen Schaumstoffplatte verringert werden.

Alternativ sind nach einer Weiterbildung der Erfindung die Berührungsflächen der Schaumstoffplatten ausschließlich über ihre extrusionshautfreien Flächenbereiche miteinander verbunden. Bevorzugt ist in diesem Zusammenhang der Anteil der extrusionshautfreien Flächenbereiche an der Gesamtfläche einer jeweiligen Berührungsfläche der dünnen Schaumstoffplatten groß, dieser liegt dann vorzugsweise im Bereich zwischen etwa 75 und 85 %. Bei einem derartig hohen Verhältnis von extrusionshautfreien Flächenbereichen zur Gesamtfläche der Berührungsfläche ist eine sichere Verbindung der miteinander verbundenen Schaumstoffplatten über ausschließlich nur die extrusionshautfreien Flächenbereiche möglich.

Vorzugsweise werden die extrusionshautfreien Flächenbereiche der Berührungsflächen durch das Entfernen der Extrusionshaut ausgebildet. Vorzugsweise wird die Extrusionshaut in den davon zu befreienden Flächenbereichen mechanisch entfernt, bevorzugt mittels Fräsen oder Schleifen. Das mechanische Entfernen stellt eine einfache und zugleich effektive Möglichkeit für das Ausbilden extrusionshautfreier Flächenbereiche dar. Eine alternative Ausgestaltung der Erfindung sieht vor, dass die Extrusionshaut mit Hilfe chemischer Bearbeitungsprozesse bzw. Substanzen, wie zum Beispiel entsprechender Lösungsmittel, an den Berührungsflächen der dünnen Ausgangsplatten aufgelöst oder entfernt und die extrusionshautfreien Flächenbereiche ausgebildet werden.

Eine andere Weiterbildung der Erfindung sieht vor, dass die Extrusionshautstreifen eine Breite aufweisen, die in einem Bereich zwischen 2 und 20 cm liegt, bevorzugt zwischen 5 und 10 cm. Mit einer solchen Breite der Extrusionshautstreifen ist eine sichere Übertragung der Flächenspannung in der Ebene, bevorzugt von einer Randkante zur anderen Randkante, der Berührungsfläche der Schaumstoffplatte gewährleistet. Eine Krümmung bzw. Wölbung der Schaumstoffplatte ist durch die Vielzahl der jeweils parallel und quer zueinander verlaufenden Extrusionshautstreifen mit den angegebenen Abmessungen auf vorteilhafte Weise vermieden. Das bevorzugte Breitenmaß der Extrusionshautstreifen an der Berührungsfläche stellt einen vorteilhaften Kompromiss in Verbindung mit den Größenabmessungen der auszubildenden extrusionshautfreien Flächenbereichen dar, über die ein ausreichendes Diffusionsvermögen zwischen den miteinander verbundenen dünnen Schaumstoffplatten gewährleistet werden soll.

In diesem Zusammenhang weisen gemäß einer anderen Weiterbildung der erfindungsgemäßen Schaumstoffplatte einander benachbarte Extrusionshautstreifen einen Abstand zueinander im Bereich von 5 bis 20 cm auf, vorzugsweise von 10 bis 15 cm. Damit werden zwischen unmittelbar zueinander benachbart ausgebildeten Extrusionshautstreifen ausreichend große extrusionshautfreie Flächenbereiche erzeugt. Die Flächenbereiche, über die die Diffusion zwischen den miteinander verbundenen Schaumstoffplatten erfolgen soll, weisen vorzugsweise eine im Wesentlichen rechteckige Form mit Kantenlängen von etwa 10 bis 15 cm auf.

Des Weiteren ist in einer alternativen Ausgestaltung der erfindungsgemäßen Schaumstoffplatte vorgesehen, dass die extrusionshautfreien Flächenbereiche bezogen auf die Gesamtfläche einer Berührungsfläche einer Schaumstoffplatte ein Verhältnis im Bereich von 20 bis 80 % aufweisen, bevorzugt von 30 bis 60 %. Mit einem solch gewählten Verhältnis von extrusionshautfreien Flächenbereichen zur Gesamtfläche der Berührungsfläche ist auf vorteilhafte Weise ein ausreichend hohes Diffusionsvermögen zwischen den bevorzugt zwei, drei oder auch vier miteinander verbundenen dünnen Schaumstoffplatten gewährleistet. Entsprechend der Anzahl der miteinander verbundenen Ausgangspaltten wird eine zweilagige, dreilagige oder vierlagige Schaumstoffplatte ausgebildet. Vorbestimmte Mindest- oder Maximalverhältnisse sollten dabei nicht unter- bzw. überschritten werden, um in Abhängigkeit von der gewählten Verbindungvariante zwischen den Ausgangsplatten, ob ausschließlich über die Extrusionshautstreifen oder alternativ nur über die extrusionshautfreien Flächenbereiche, einen sicheren Halt der dünnen Schaumstoffplatten untereinander und damit einen zuverlässigen Verbund der hergestellten Schaumstoffplatte gewährleisten zu können.

Gemäß einer weiteren Weiterbildung der Erfindung ist das Klebermaterial eine Mischung aus zumindest einem oder mehreren Trägermaterialien, einem oder mehreren Polymeren und Hohlpolymermikrosphären. Das Trägermaterial bildet dabei vorzugsweise den Hauptbestandteil des Klebermaterials, welches vorzugsweise ein oder mehrere organische Lösungsmittel und/oder ein oder mehrere reaktive Monomeren umfasst. Die eingesetzten Polymere, die vorzugsweise kompatibel mit dem Polystyrol der Schaumstoffplatten sind, haben vorrangig die Aufgabe, Bereiche zwischen den miteinander zu verbindenden Berührungsflächen aufzufüllen und nach Verfestigung des Klebermaterials die Verbindung zu gewährleisten. Die verwendeten Hohlpolymermikrosphären werden bevorzugt als Schaummittel eingesetzt, mittels denen vorzugsweise die Dichte des Klebermaterials auf etwa die Hälfte reduziert werden kann. Somit kann der Einsatz von zum Beispiel als Trägermaterial dienenden Lösungsmitteln signifikant verringert werden, was zum einen die Umwelt schont und zum anderen wird mit deutlich weniger Klebermaterial die Verbindung zwischen den untereinander zu fügenden Oberflächen erreicht.

Eine Weiterbildung der erfindungsgemäßen Schaumstoffplatte sieht vor, dass das Trägermaterial ein organisches Lösungsmittel enthält, welches ausgewählt ist aus der Gruppe bestehend aus: Ethylacetat, Butylacetat, Toluen, Karbonate und deren Mischungen, wobei das Lösungsmittel bevorzugt zwischen 50 und 90 % bezogen auf die Gesamtmenge des Klebermaterials umfasst, und/oder reaktive Monomere enthält, die ausgewählt sind aus der Gruppe bestehend aus Styrol, α-Methylstyrol, Methylmethacrylat und deren Mischungen, wobei die reaktiven Monomere zwischen 2 und 20 % bezogen auf die Gesamtmenge des Klebermaterials aufweisen. Mit den Lösungsmitteln werden vorzugsweise die Oberflächen der Berührungsflächen der Schaumstoffplatten angelöst, damit eine Verbindung mit den vorzugsweise im Klebermaterial vorhandenen Polymeren hergestellt werden kann. Die reaktiven Monomere unterstützen den Aufbau von Polymeren im Klebermaterial, wodurch die Haftwirkung des Klebermaterials verbessert ist.

Das oder die Bestandteile des Klebermaterials ausbildenden Polymers oder Polymere ist oder sind vorzugsweise ausgewählt aus der Gruppe bestehend aus Polystyrol, PMMA, SBS, ABS und deren Gemische, wobei das Polymer oder die Polymere eine Menge zwischen bevorzugt 5 und 35 % bezogen auf die Gesamtmenge des Klebermaterials aufweisen.

Eine andere Weiterbildung der Erfindung sieht vor, dass das Klebermaterial zusätzlich einen Katalysator enthält, vorzugsweise ausgewählt aus der Gruppe der Peroxide, wobei der Katalysator zwischen 0,01 und 0,5 % bezogen auf die Gesamtmenge des Klebermaterials ausmacht. Durch die Verwendung eines Katalysators soll insbesondere die Reaktion des Klebstoffes, insbesondere das Aushärten bzw. Abtrocknen des Klebermaterials beschleunigt werden, was sich gegebenenfalls auch auf das Klebeverhalten des Klebermaterials auswirkt. Eine vorzugsweise aus zwei, drei oder vier dünnen Schaumstoffplatten hergestellte dicke mehrlagige Schaumstoffplatte kann bereits kurz nach ihrer Herstellung ohne lange Ruhe- oder Trockenzeiten für eine mögliche Weiterverarbeitung verwendet werden.

Darüber hinaus ist vorgesehen, dass das Klebermaterial zusätzlich ein flammhemmendes Mittel enthält, vorzugsweise ausgewählt aus der Gruppe bestehend aus HBCD und Tetrabromobisphenol, wobei das flammhemmende Mittel eine Menge im Bereich zwischen 1 und 4 % bezogen auf die Gesamtmenge des Klebermaterials aufweist. Die Verwendung eines flammhemmenden Mittels bzw. eines Flammschutzmittels trägt auf vorteilhafte Weise zu verbesserten Eigenschaften hinsichtlich des Flammverhaltens der erzeugten, mehrlagigen Schaumstoffplatte bei.

Bevorzugt enthält der Klebstoff Hohlpolymermikrosphären, welche eine Menge im Bereich zwischen 1 und 6 % bezogen auf die Gesamtmenge des Klebermaterials aufweisen, bevorzugt zwischen 1 und 4 % bezogen auf die Gesamtmenge. Die verwendeten Hohlpolymermikrosphären dienen insbesondere als Schaummittel, mittels derer sich der Volumenanteil des Klebermaterials vorzugsweise auf zumindest das Doppelte vergrößern lässt. Ein solch bevorzugt in der Dichte verringertes Klebermaterial kann mit der gleichen Menge an Klebermaterial jedoch problemlos nahezu die gleiche Fläche miteinander verkleben. Damit ist auf vorteilhafte Weise eine Materialeinsparung des Klebermaterials bewirkt.

Eine andere Weiterbildung der Erfindung sieht vor, dass beide miteinander verbundenen Schaumstoffplatten aus Materialien ausgebildet sind, welche sich hinsichtlich ihrer Stoffeigenschaften und/oder mechanischen Eigenschaften unterscheiden. Damit wird erreicht, dass die aus zumindest zwei unterschiedlichen, dünnen Schaumstoffplatten ausgebildete dicke Schaumstoffplatte in Abhängigkeit der an sie gestellten Anforderungen individuell angepasst werden kann. Zum Beispiel können die beiden miteinander verbundenen Schaumstoffplatten unterschiedliche Materialstärken oder Wärmeleitfähigkeiten aufweisen. Des Weiteren ist in einer anderen Ausgestaltung der Erfindung vorgesehen, dass eine der die zumindest zweilagige Schaumstoffplatte ausbildenden dünnen Ausgangsplatten eine höhere Druckfestigkeit aufweist als die andere oder weiteren Schaumstoffplatten.

Ein weiterer Aspekt der Erfindung betrifft eine Schaumstoffplatte zum Herstellen einer zweilagigen, insbesondere mittels eines Fügeverfahrens hergestellten Schaumstoffplatte, insbesondere zum Herstellen einer Schaumstoffplatte nach einem der vorstehenden bevorzugten Ausführungsformen, mit einer vorzugsweise im Wesentlichen quaderförmigen Grundform mit mehreren Flächen, bei der erfindungsgemäß wenigstens eine der bevorzugt ebenen Flächen Flächenbereiche aufweist, welche jeweils von ihrer bei der Herstellung der beiden Schaumstoffplatten entstehenden Extrusionshaut befreit sind, und Flächenbereiche mit Extrusionshaut aufweist, und die Berührungsflächen der Schaumstoffplatten jeweils mit Extrusionshaut versehene Randbereiche aufweisen, welche bevorzugt umlaufend ausgebildet sind.

Vorteilhafte Weiterbildungen der erfindungsgemäßen Schaumstoffplatte ergeben sich aus den vorstehenden Erläuterungen zum erfindungsgemäßen zweilagigen Schaumstoffplatte und deren bevorzugten Ausführungsformen. Insoweit wird auf die oben stehenden Erläuterungen verwiesen.

Ein weiterer Aspekt der Erfindung betrifft ein Verfahren zum Herstellen von zumindest zweilagigen Schaumstoffplatten durch Verkleben von mindestens zwei dünneren Schaumstoffplatten, umfassend die Schritte: Bereitstellen zweier als Ausgangsplatten dienender, dünner Schaumstoffplatten, Erzeugen einer Berührungsfläche an mindestens einer der dünnen Schaumstoffplatten durch nur teilweises Entfernen der Extrusionshaut an wenigstens einer im Wesentlichen ebenen Fläche der dünnen Schaumstoffplatten, wobei die Berührungsflächen der Schaumstoffplatten jeweils mit Extrusionshaut versehene Randbereiche aufweisen, welche umlaufend ausgebildet sind, Auftragen eines Klebermaterials auf zumindest eine Berührungsfläche der miteinander zu verbindenden dünnen Schaumstoffplatten, und miteinander in Anlagebringen der Berührungsflächen und Fügen der bevorzugt jeweils mit extrusionshautfreien Flächenbereichen versehenen Berührungsflächen der dünnen Schaumstoffplatten zu einer dicken, mehrlagigen Schaumstoffplatte. Der Erfindung liegt die Erkenntnis zugrunde, dass mit Hilfe der erfindungsgemäßen Verfahrensschritte eine sichere und somit zuverlässige Verbindung zwischen zwei Schaumstoffplatten erreicht ist, wobei eine mögliche Krümmung oder Wölbung der einzelnen Schaumstoffplatten bei der Herstellung der zumindest zweilagigen Schaumstoffplatte vermieden ist. Zudem lässt sich der Materialverlust durch das nur teilweise Entfernen der Extrusionshaut auf vorteilhafte Weise vermindern.

Das erfindungsgemäße Verfahren wird vorteilhaft weitergebildet durch einen, mehrere oder sämtliche der Schritte:
- Erzeugen von untereinander separierten extrusionshautfreien Flächenbereichen an den miteinander in Anlage zu bringenden Berührungsflächen der dünnen Schaumstoffplatten,
- Erzeugen von einer gleichmäßig verteilten Anordnung der extrusionshautfreien Flächenbereichen an den Berührungsflächen,
- Erzeugen von untereinander separierten extrusionshautfreien Flächenbereichen und zwischen den extrusionshautfreien Flächenbereichen verlaufenden Extrusionshautstreifen,
- Auftragen des Klebermaterials auf die Flächenbereiche mit Extrusionshaut der Berührungsfläche von zumindest einer Schaumstoffplatten,
- Auftragen des Klebermaterials auf die extrusionshautfreien Flächenbereichen der Berührungsfläche von zumindest einer Schaumstoffplatten,

Hinsichtlich weiterer vorteilhafter Ausgestaltungen des erfindungsgemäßen Verfahrens wird auf die obigen Ausführungen zur erfindungsgemäßen Schaumstoffplatte Bezug genommen.

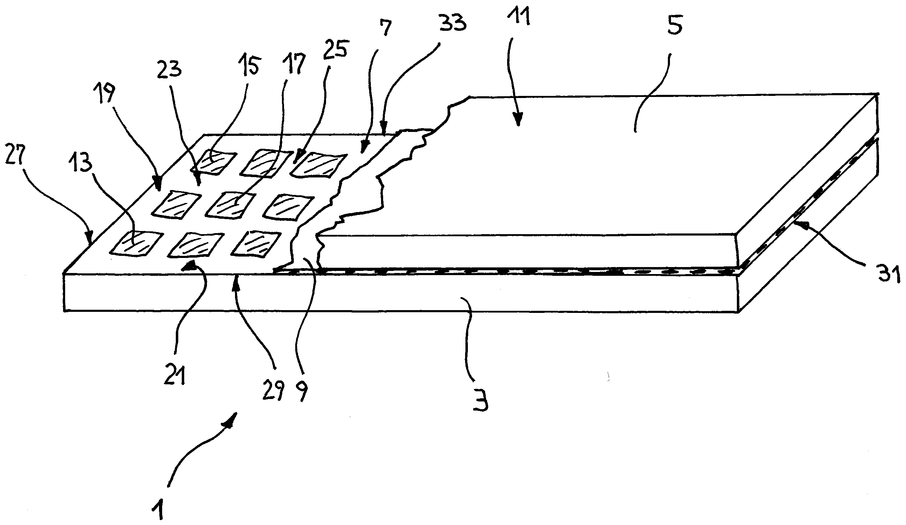

Nachfolgend wird die Erfindung anhand eines möglichen Ausführungsbeispiels unter Bezugnahme auf die beigefügte Figur näher beschrieben.

Hierbei zeigt die Figur eine extrudierte Schaumstoffplatte, auch bezeichnet als XPS-Platte, welche zweilagig ausgebildet ist, das heißt, dass die Schaumstoffplatte 1 aus zwei miteinander verbundenen, dünnen Schaumstoffplatten 3, 5 ausgebildet ist. Die Schaumstoffplatten 3, 5 sind an ihren einander zugewandten Berührungsflächen 7 mittels eines Klebermaterials 9 stoffschlüssig miteinander verbunden. Vorliegend sind die Schaumstoffplatten 3, 5 vorzugsweise vollflächig mittels des Klebermaterials 9 miteinander verbunden. Andere Ausgestaltungen der Schaumstoffplatte 1 sehen auch das bereichsweise bzw. teilweise Verbinden der als Ausgangsplatten dienenden, dünnen Schaumstoffplatten 3, 5 vor. Um das Diffusionsvermögen zwischen den miteinander verbundenen Schaumstoffplatten 3, 5 zu verbessern und gleichzeitig das Krümmen bzw. Wölben der Schaumstoffplatten zu vermeiden, sind die Berührungsflächen 7 der Schaumstoffplatten 3, 5 nur teilweise von der bei der Herstellung der beiden dünnen Schaumstoffplatten entstehenden Extrusionshaut 11 befreit. Die einander zugewandten Berührungsflächen 7 weisen somit extrusionshautfreie Flächenbereiche 13, 15, 17 auf. Die extrusionshautfreien Flächenbereiche 13, 15, 17 sind dabei in vorbestimmten, bevorzugt gleichmäßigen Abständen an den Berührungsflächen 7 angeordnet bzw. ausgebildet. Die extrusionshautfreien Flächenbereiche 13, 15, 17 der einander zugewandten Berührungsflächen sind bevorzugt zueinander deckungsgleich angeordnet, wodurch das Diffusionsvermögen zwischen den beiden dünnen Schaumplatten 3, 5 gewährleistet ist. Zudem weisen die Berührungsflächen 7 der Schaumstoffplatten 3, 5 mit Extrusionshaut versehene Randbereiche 19, 21 auf, die bevorzugt umlaufend ausgebildet sind, also nicht von extrusionshautfreien Flächenbereichen unterbrochen werden. Die Flächenbereiche, welche nicht von der Extrusionshaut 11 befreit werden, unterteilen bzw. separieren die extrusionshautfreien Flächenbereichen 13, 15, 17 voneinander und sind bevorzugt als durchgängige Extrusionshautstreifen 23, 25 ausgebildet. Die Extrusionshautstreifen 23, 25 erstrecken sich von einer Randkante 27, 29 der Berührungsfläche 7 zu der gegenüberliegenden Randkante 31, 33. Dabei verlaufen die Extrusionshautstreifen 23, 25 parallel zueinander, welche einander gegenüberliegende Randkanten 27, 31, 29, 33 der Berührungsflächen 7 miteinander verbinden. Bevorzugt verlaufen die Extrusionshautstreifen 23, 25 im Wesentlichen senkrecht zueinander, welche einander benachbarte Randkanten 27, 29, 31, 33 der Berührungsflächen 7 verbinden. Die zwischen den Extrusionshautstreifen 23, 25 angeordneten extrusionshautfreien Flächenbereiche 13, 15, 17 weisen eine äußere Form auf, welche vorzugsweise ausgewählt ist aus der Gruppe bestehend aus im Wesentlichen rechteckig, oval und kreisförmig. Vorzugsweise werden die extrusionshautfreien Flächenbereiche 13, 15, 17 der miteinander über das Klebermaterial 9 verbundenen Berührungsflächen 7 durch das bevorzugt mechanische Entfernen der bei der Herstellung der Schaumplatten 3, 5 entstehenden Extrusionshaut 11 ausgebildet. Die Extrusionshautstreifen 23, 25 sowie die Randbereiche 19, 21 weisen bevorzugt ein Breitemaß auf, das in einem Bereich zwischen bevorzugt 5 und 10 cm liegt. Breitenmaße der Extrusionshautstreifen oder der Randbereiche, welche in einem Bereich zwischen 2 und 20 cm liegen, sind ebenfalls denkbar. Einander benachbarte Extrusionshautstreifen weisen einen Abstand zueinander im Bereich zwischen 5 und 20 cm, vorzugsweise zwischen 10 und 15 cm auf. Die zwischen einander benachbarten Extrusionshautstreifen 23, 25 ausgebildeten extrusionshautfreien Flächenbereiche 13, 15, 17 weisen somit bevorzugt Randkanten auf, die ein Längenmaß im Bereich zwischen 10 und 15 cm haben. Die an den Berührungsflächen 7 der Schaumstoffplatten 3, 5 ausgebildeten extrusionshautfreien Flächenbereiche 13, 15, 17 weisen bezogen auf die Gesamtfläche einer jeweiligen Berührungsfläche ein Verhältnis im Bereich von 20 bis 80 %, bevorzugt zwischen 30 und 60 % auf. Mit Hilfe eines solchen Verhältnisses ist ein sicheres Diffusionsvermögen zwischen den die Schaumstoffplatte 1 ausbildenden Schaumstoffplatten 3, 5 bewirkt.

## Patentansprüche

1. Schaumstoffplatte (1), insbesondere Polystyrolschaumstoffplatte, die zumindest aus zwei miteinander verbundenen Schaumstoffplatten (3, 5) ausgebildet ist, wobei einander zugewandte Berührungsflächen (7) der beiden Schaumstoffplatten (3, 5) miteinander, bevorzugt stoffschlüssig, verbunden sind, wobei die Berührungsflächen (7) jeweils Flächenbereiche (13, 15, 17) aufweisen, welche von ihrer bei der Herstellung der beiden Schaumstoffplatten (3, 5) entstehenden Extrusionshaut befreit sind, und Flächenbereiche mit Extrusionshaut (11) aufweisen,
**dadurch gekennzeichnet, dass** die Berührungsflächen (7) der Schaumstoffplatten (3, 5) jeweils mit Extrusionshaut (11) versehene Randbereiche (19, 21) aufweisen, welche umlaufend ausgebildet sind.

2. Schaumstoffplatte nach Anspruch 1,
**dadurch gekennzeichnet, dass** die Berührungsflächen (7) der miteinander verbundenen Schaumstoffplatten (3, 5) jeweils mehrere voneinander separierte, extrusionshautfreie Flächenbereiche (13, 15, 17) aufweisen.

3. Schaumstoffplatte nach einem der Ansprüche 1 und 2,
**dadurch gekennzeichnet, dass** die extrusionshautfreien Flächenbereiche (13, 15, 17) in vorbestimmten Abständen zueinander, bevorzugt gleichmäßig verteilt, an den Berührungsflächen (7) der Schaumstoffplatten (3, 5) ausgebildet sind.

4. Schaumstoffplatte nach einem der Ansprüche 1 bis 3,
**dadurch gekennzeichnet, dass** die einander zugewandten Berührungsflächen (7) der beiden Schaumstoffplatten (3, 5) mit ihren extrusionshautfreien Flächenbereiche (13, 15, 17) zueinander deckungsgleich angeordnet sind.

5. Schaumstoffplatte nach einem der Ansprüche 1 bis 4,
**dadurch gekennzeichnet, dass** jeder extrusionshautfreie Flächenbereich (13, 15, 17) eine äußere Form aufweist, vorzugsweise ausgewählt aus der Gruppe bestehend aus im Wesentlichen rechteckig, oval und kreisförmig.

6. Schaumstoffplatte nach einem der Ansprüche 1 bis 5,
**dadurch gekennzeichnet, dass** die Berührungsflächen (7) jeweils zwischen den bevorzugt in gleichmäßigen Abständen zueinander angeordneten extrusionshautfreien Flächenbereichen (13, 15, 17) ein oder mehrere sich von einer Randkante (27, 29) zu einer bevorzugt gegenüberliegenden Randkante (31, 33) der Berührungsfläche (7), bevorzugt durchgängig erstreckende Extrusionshautstreifen (23, 25) aufweisen.

7. Schaumstoffplatte nach Anspruch 6,
**dadurch gekennzeichnet, dass** die Extrusionshautstreifen (23, 25), welche sich zwischen einander gegenüberliegenden Randkanten (27, 31 und 29, 33) erstrecken, parallel zueinander verlaufen und/oder die Extrusionshautstreifen (23, 25), welche an einander benachbarten Randkanten (27, 29, 31, 33) auslaufen, im Wesentlichen rechtwinklig zueinander verlaufen.

8. Schaumstoffplatte nach einem der Ansprüche 1 bis 7,
**dadurch gekennzeichnet, dass** die einander zugewandten Berührungsflächen (7) der Schaumstoffplatten (3, 5) bereichsweise oder vollflächig mittels eines Klebermaterials (9) miteinander verbunden sind.

9. Schaumstoffplatte nach wenigstens einem der vorhergehenden Ansprüche, **dadurch gekennzeichnet, dass** die Schaumstoffplatten (3, 5) über ihre an den Berührungsflächen (7) ausgebildeten Extrusionshautstreifen (23, 25) miteinander verbunden sind.

10. Schaumstoffplatte nach einem der Ansprüche 1 bis 9,
**dadurch gekennzeichnet, dass** die Berührungsflächen (7) der Schaumstoffplatten (3, 5) über ihre extrusionshautfreien Flächenbereiche (13, 15, 17) miteinander verbunden sind.

11. Schaumstoffplatte nach einem der Ansprüche 1 bis 10,
**dadurch gekennzeichnet, dass** die extrusionshautfreien Flächenbereiche (13, 15, 17) der Berührungsflächen (7) durch das Entfernen der Extrusionshaut (11) ausgebildet sind.

12. Schaumstoffplatte nach einem der Ansprüche 6-11, **dadurch gekennzeichnet, dass** die Extrusionshautstreifen (23, 25) eine Breite aufweisen, die in einem Bereich zwischen 2 und 20 cm liegt, bevorzugt zwischen 5 und 10 cm.

13. Schaumstoffplatte nach einem der Ansprüche 6-12, **dadurch gekennzeichnet, dass** einander benachbarte Extrusionshautstreifen (23, 25) einen Abstand zueinander im Bereich von 5 bis 20 cm aufweisen, vorzugsweise von 5 bis 10 cm.

14. Schaumstoffplatte nach einem der vorhergehenden Ansprüche,
**dadurch gekennzeichnet, dass** die extrusionshautfreien Flächenbereiche (13, 15, 17) bezogen auf die Gesamtfläche einer Berührungsfläche (7) einer Schaumstoffplatte (3, 5) ein Verhältnis im Bereich von 20 bis 80 % aufweisen, bevorzugt von 30 bis 60 %.

15. Schaumstoffplatte, die zumindest aus zwei miteinander mittels eines Klebermaterials verbundenen Schaumstoffplatten (3, 5) nach einem der Ansprüche 1 bis 14, ausgebildet ist,
**dadurch gekennzeichnet, dass** das Klebermaterial mindestens folgende Komponenten enthält;
- einem oder mehreren Trägermaterialien,
- einem oder mehreren Polymeren, und
- Hohlpolymermikrosphären, vorzugsweise als Schaummittel..

16. Schaumstoffplatte nach Anspruch 15,
**dadurch gekennzeichnet, dass** das Trägermaterial ein organisches Lösungsmittel enthält, das ausgewählt ist aus der Gruppe bestehend aus: Ethylacetat, Butylacetat, Toluen, Karbonate und deren Mischungen, wobei das Lösungsmittel bevorzugt zwischen 50 und 90 % bezogen auf die Gesamtmenge des Klebermaterials umfasst,
und/oder dass das Trägermaterial reaktive Monomere enthält, die ausgewählt sind aus der Gruppe bestehend aus Styrol, α-Methylstyrol, Methylmethacrylat und deren Mischungen, wobei die reaktiven Monomere zwischen 2 und 20 % bezogen auf die Gesamtmenge des Klebermaterials aufweisen.

17. Schaumstoffplatte nach einem der Ansprüche 15 und 16,
**dadurch gekennzeichnet, dass** das Polymer vorzugsweise ausgewählt ist aus der Gruppe bestehend aus: Polystyrol, PMMA, SBS, ABS und deren Gemische, wobei das Polymer eine Menge zwischen bevorzugt 5 und 35 % bezogen auf die Gesamtmenge des Klebermaterials aufweist.

18. Schaumstoffplatte nach einem der Ansprüche 15 bis 17,
**dadurch gekennzeichnet, dass** der Klebermaterial zusätzlich einen Katalysator enthält, vorzugsweise ausgewählt aus der Gruppe der Peroxide, wobei der Katalysator zwischen 0,01 und 0,5 % bezogen auf die Gesamtmenge des Klebematerials ausmacht.

19. Schaumstoffplatte nach einem der Ansprüche 15 bis 18,
**dadurch gekennzeichnet, dass** der Klebstoff zusätzlich ein flammhemmendes Mittel enthält, vorzugsweise ausgewählt aus der Gruppe, bestehend aus HBCD und Tetrabromobisphenol, wobei das flammhemmende Mittel eine Menge im Bereich zwischen 1 und 4 % bezogen auf die Gesamtmenge des Klebermaterials aufweist.

20. Schaumstoffplatte nach einem der Ansprüche 15 bis 19,
**dadurch gekennzeichnet, dass** der Klebstoff Hohlpolymermikrosphären enthält, welche eine Menge im Bereich zwischen 1 und 6 % bezogen auf die Gesamtmenge des Klebematerials aufweisen, bevorzugt zwischen 1 und 4 %.

21. Schaumstoffplatte nach einem der Ansprüche 1 bis 20,
**dadurch gekennzeichnet, dass** die beiden miteinander verbundenen Schaumstoffplatten (3, 5) aus Materialien ausgebildet sind, welche sich hinsichtlich ihrer Stoffeigenschaften und/oder mechanischen Eigenschaften unterscheiden.

22. Schaumstoffplatte (3, 5) zum Herstellen einer zweilagigen, insbesondere mittels eines Fügeverfahrens hergestellten Schaumstoffplatte, insbesondere zum Herstellen einer Schaumstoffplatte (1) nach einem der Ansprüche 1 bis 21, mit einer im Wesentlichen quaderförmigen Grundform mit mehreren Flächen,
wobei wenigstens eine der bevorzugt ebenen Flächen (7) Flächenbereiche (13, 15, 17) aufweist, welche jeweils von ihrer bei der Herstellung der beiden Schaumstoffplatten (3, 5) entstehenden Extrusionshaut befreit sind, und Flächenbereiche mit Extrusionshaut (11) aufweist,
**dadurch gekennzeichnet, dass** die als Berührungsfläche vorgesehene Fläche (7) der Schaumstoffplatte (3, 5) jeweils mit Extrusionshaut (11) versehene Randbereiche (19, 21) aufweist, welche umlaufend ausgebildet sind.

23. Verfahren zum Herstellen einer mehrlagigen Schaumstoffplatte, insbesondere einer Schaumstoffplatte (1) nach einem der Ansprüche 1 bis 21, aus mindestens zwei dünnen miteinander zu verbindenden Schaumstoffplatten (3, 5), umfassend die Schritte:
- Bereitstellen zweier als Ausgangsplatten dienender, dünner Schaumstoffplatten (3, 5),
- Erzeugen einer Berührungsfläche (7) an mindestens einer der dünnen Schaumstoffplatten (3, 5) durch nur teilweises Entfernen der Extrusionshaut (11) an wenigstens einer im Wesentlichen ebenen Fläche der Schaumstoffplatten (3, 5), wobei die Berührungsflächen (7) der Schaumstoffplatten (3, 5) jeweils mit Extrusionshaut (11) versehene Randbereiche (19, 21) aufweisen, welche umlaufend ausgebildet sind,
- Auftragen eines Klebermaterials (9) auf zumindest eine Berührungsfläche (7) der miteinander zu verbindenden dünnen Schaumstoffplatten (3, 5), und
- miteinander in Anlagebringen der Berührungsflächen (7) und Fügen der bevorzugt jeweils mit extrusionshautfreien Flächenbereichen (13, 15, 17) versehenen Berührungsflächen (7) der dünnen Schaumstoffplatten (3, 5) zu einer dicken, mehrlagigen Schaumstoffplatte (1).

24. Verfahren nach Anspruch 23,
umfassend einen, mehrere oder sämtliche der Schritte:
- Erzeugen von untereinander separierten extrusionshautfreien Flächenbereichen (13, 15, 17) an den miteinander in Anlage zu bringenden Berührungsflächen (7) der dünnen Schaumstoffplatten (3, 5),
- Erzeugen von einer gleichmäßig verteilten Anordnung der extrusionshautfreien Flächenbereichen (13, 15, 17) an den Berührungsflächen (7),
- Erzeugen von untereinander separierten extrusionshautfreien Flächenbereichen (13, 15, 17) und zwischen den extrusionshautfreien Flächenbereichen verlaufenden Extrusionshautstreifen (23, 25),
- Auftragen des Klebermaterials (9) auf die Flächenbereiche mit Extrusionshaut (11) der Berührungsfläche (7) von zumindest einer Schaumstoffplatten (3, 5),
- Auftragen des Klebermaterials (9) auf die extrusionshautfreien Flächenbereichen (13, 15, 17) der Berührungsfläche (7) von zumindest einer Schaumstoffplatten (3, 5).

## Claims

1. Foam panel (1), in particular polystyrene foam panel, which is at least formed from two foam panels (3, 5) connected to each other, mutually facing contact surfaces (7) of the two foam panels (3, 5) being connected to each other, preferably integrally, the contact surfaces (7) each having surface regions (13, 15, 17) which are freed of their extrusion skin arising during the production of the two foam panels (3, 5) and having surface regions with extrusion skin (11),
**characterized in that** the contact surfaces (7) of the foam panels (3, 5) have edge regions (19, 21) each provided with extrusion skin (11), which are formed circumferentially.

2. Foam panel according to Claim 1,
**characterized in that** the contact surfaces (7) of the foam panels (3, 5) that are connected to each other each have a plurality of extrusion-skin-free surface regions (13, 15, 17) that are separated from one another.

3. Foam panel according to either of Claims 1 and 2,
**characterized in that** the extrusion-skin-free surface regions (13, 15, 17) are formed at predetermined intervals from one another, preferably uniformly distributed, on the contact surfaces (7) of the foam panels (3, 5).

4. Foam panel according to one of Claims 1 to 3,
**characterized in that** the mutually facing contact surfaces (7) of the two foam panels (3, 5) are arranged with their extrusion-skin-free surface regions (13, 15, 17) congruent with one another.

5. Foam panel according to one of Claims 1 to 4,
**characterized in that** each extrusion-skin-free surface region (13, 15, 17) has an external shape, preferably selected from the group comprising substantially rectangular, oval and circular.

6. Foam panel according to one of Claims 1 to 5,
**characterized in that** the contact surfaces (7) respectively between the extrusion-skin-free surface regions (13, 15, 17) preferably arranged at uniform intervals from one another have one or more extrusion-skin strips (23, 25) extending from one marginal edge (27, 29) to a preferably opposite marginal edge (31, 33) of the contact surface (7), preferably extending continuously.

7. Foam panel according to Claim 6,
**characterized in that** the extrusion-skin strips (23, 25) which extend between mutually opposite marginal edges (27, 31 and 29, 33) extend parallel to one another and/or the extrusion-skin strips (23, 25) which run out at mutually adjacent marginal edges (27, 29, 31, 33) extend substantially at right angles to one another.

8. Foam panel according to one of Claims 1 to 7,
**characterized in that** the mutually facing contact surfaces (7) of the foam panels (3, 5) are connected to one another in some regions or over the entire area by means of an adhesive material (9) .

9. Foam panel according to at least one of the preceding claims,
**characterized in that** the foam panels (3, 5) are connected to each other via their extrusion-skin strips (23, 25) formed on the contact surfaces (7) .

10. Foam panel according to one of Claims 1 to 9,
**characterized in that** the contact surfaces (7) of the foam panels (3, 5) are connected to each other via their extrusion-skin-free surface regions (13, 15, 17).

11. Foam panel according to one of Claims 1 to 10,
**characterized in that** the extrusion-skin-free surface regions (13, 15, 17) of the contact surfaces (7) are formed by the removal of the extrusion skin (11).

12. Foam panel according to one of Claims 6-11,
**characterized in that** the extrusion-skin strips (23, 25) have a width which lies in a range between 2 and 20 cm, preferably between 5 and 10 cm.

13. Foam panel according to one of Claims 6-12,
**characterized in that** mutually adjacent extrusion-skin strips (23, 25) have a distance from one another in the range from 5 to 20 cm, preferably from 5 to 10 cm.

14. Foam panel according to one of the preceding claims,
**characterized in that**, based on the total area of a contact surface (7) of a foam panel (3, 5), the extrusion-skin-free surface regions (13, 15, 17) have a ratio in the range from 20 to 80%, preferably from 30 to 60%.

15. Foam panel which is at least formed from two foam panels (3, 5) according to one of Claims 1 to 14 connected to each other by means of an adhesive material,
**characterized in that** the adhesive material contains at least the following components:
- one or more carrier materials,
- one or more polymers, and
- hollow polymer microspheres, preferably as foaming agent.

16. Foam panel according to Claim 15,
**characterized in that** the carrier material contains an organic solvent which is selected from the group comprising: ethyl acetate, butyl acetate, toluene, carbonates and their mixtures, wherein the solvent preferably comprises between 50 and 90%, based on the total quantity of the adhesive material,
and/or **in that** the carrier material contains reactive monomers which are selected from the group comprising styrene, α-methyl styrene, methyl methacrylate and their mixtures, wherein the reactive monomers have between 2 and 20%, based on the total quantity of the adhesive material.

17. Foam panel according to either of Claims 15 and 16,
**characterized in that** the polymer is preferably selected from the group comprising: polystyrene, PMMA, SBS, ABS and their mixtures, wherein the polymer has a quantity preferably between 5 and 35%, based on the total quantity of the adhesive material.

18. Foam panel according to one of Claims 15 to 17,
**characterized in that** the adhesive material additionally contains a catalyst, preferably selected from the group of peroxides, wherein the catalyst makes up between 0.01 and 0.5%, based on the total quantity of the adhesive material.

19. Foam panel according to one of Claims 15 to 18,
**characterized in that** the adhesive additionally contains a flame-retardant agent, preferably selected from the group comprising HBCD and tetrabromobisphenol, wherein the flame-retardant agent has a quantity in the range between 1 and 4%, based on the total quantity of the adhesive material.

20. Foam panel according to one of Claims 15 to 19,
**characterized in that** the adhesive contains hollow polymer microspheres, which have a quantity in the range between 1 and 6%, based on the total quantity of the adhesive material, preferably between 1 and 4%.

21. Foam panel according to one of Claims 1 to 20,
**characterized in that** the two foam panels (3, 5) that are connected to each other are formed from materials which differ in terms of their material properties and/or mechanical properties.

22. Foam panel (3, 5) for producing a two layer foam panel, in particular produced by means of a joining process, in particular for producing a foam panel (1) according to one of Claims 1 to 21, having a substantially cube-like basic shape with several surfaces,
at least one of the preferably flat surfaces (7) having surface regions (13, 15, 17) which are each freed of their extrusion skin arising during the production of the two foam panels (3, 5) and having surface regions with extrusion skin (11), **characterized in that** the surface (7) of the foam panel (3, 5) which is provided as a contact surface has edge regions (19, 21) each provided with extrusion skin (11), which are formed circumferentially.

23. Method for producing a multilayer foam panel, in particular a foam panel (1) according to one of Claims 1 to 21, from at least two thin foam panels (3, 5) to be connected to each other, comprising the steps:
- providing two thin foam panels (3, 5) serving as initial panels,
- producing a contact surface (7) on at least one of the thin foam panels (3, 5) by means of only partial removal of the extrusion skin (11) on at least one substantially flat surface of the foam panels (3, 5), wherein the contact surfaces (7) of the foam panels (3, 5) have edge regions (19, 21) each provided with extrusion skin (11), which are formed circumferentially,
- applying an adhesive material (9) to at least one contact surface (7) of the thin foam panels (3, 5) to be connected to each other, and
- bringing the contact surfaces (7) into contact with each other and joining the contact surfaces (7) of the thin foam panels (3, 5), preferably each provided with extrusion-skin-free surface regions (13, 15, 17), to form a thick multilayer foam panel (1) .

24. Method according to Claim 23,
comprising one, several or all of the steps:
- producing extrusion-skin-free surface regions (13, 15, 17) that are separated from one another on the contact surfaces (7) of the thin foam panels (3, 5) that are to be brought into contact with each other,
- producing a uniformly distributed arrangement of the extrusion-skin-free surface regions (13, 15, 17) on the contact surfaces (7),
- producing extrusion-skin-free surface regions (13, 15, 17) that are separated from one another and extrusion-skin strips (23, 25) extending between the extrusion-skin-free surface regions,
- applying the adhesive material (9) to the surface regions with extrusion skin (11) of the contact surface (7) of at least one foam panel (3, 5),
- applying the adhesive material (9) to the extrusion-skin-free surface regions (13, 15, 17) of the contact surface (7) of at least one foam panel (3, 5).

## Revendications

1. Panneau en mousse (1), en particulier panneau en mousse polystyrène, qui est réalisé au moins à partir de deux panneaux en mousse (3, 5) mutuellement reliés, dans lequel des surfaces de contact (7) tournées les unes vers les autres des deux panneaux en mousse (3, 5) sont reliées les unes aux autres, de manière préférée par liaison de matière, dans lequel les surfaces de contact (7) présentent respectivement des zones de surface (13, 15, 17), lesquelles sont dépourvues de leur enveloppe d'extrusion apparaissant lors de la fabrication des deux panneaux en mousse (3, 5), et présentent des zones de surface avec une enveloppe d'extrusion (11),
**caractérisé en ce que** les surfaces de contact (7) des panneaux en mousse (3, 5) présentent des zones de bord (19, 21) pourvues respectivement d'une enveloppe d'extrusion (11), lesquelles sont réalisées en périphérie.

2. Panneau en mousse selon la revendication 1,
**caractérisé en ce que** les surfaces de contact (7) des panneaux en mousse (3, 5) reliés les uns aux autres présentent respectivement plusieurs zones de surface (13, 15, 17) sans enveloppe d'extrusion séparées les unes des autres.

3. Panneau en mousse selon l'une quelconque des revendications 1 et 2,
**caractérisé en ce que** les zones de surface (13, 15, 17) sans enveloppe d'extrusion sont réalisées à des distances prédéfinies les unes par rapport aux autres, de manière préférée avec une répartition homogène, au niveau des surfaces de contact (7) des panneaux en mousse (3, 5).

4. Panneau en mousse selon l'une quelconque des revendications 1 à 3,
**caractérisé en ce que** les surfaces de contact (7) tournées les unes vers les autres des deux panneaux en mousse (3, 5) sont disposées de manière à coïncider les unes par rapport aux autres par leurs zones de surface (13, 15, 17) sans enveloppe d'extrusion.

5. Panneau en mousse selon l'une quelconque des revendications 1 à 4,
**caractérisé en ce que** chaque zone de surface (13, 15, 17) sans enveloppe d'extrusion présente une forme extérieure, de préférence choisie parmi le groupe constitué d'une forme sensiblement rectangulaire, ovale et circulaire.

6. Panneau en mousse selon l'une quelconque des revendications 1 à 5,
**caractérisé en ce que** les surfaces de contact (7) présentent, respectivement entre les zones de surface (13, 15, 17) sans enveloppe d'extrusion disposées les unes par rapport aux autres de manière préférée à des distances homogènes, un ou plusieurs rubans d'enveloppe d'extrusion (23, 25) s'étendant, de manière préférée en continu, depuis une arête de bord (27, 29) vers une arête de bord (31, 33) de manière préférée opposée de la surface de contact (7).

7. Panneau en mousse selon la revendication 6,
**caractérisé en ce que** les rubans d'enveloppe d'extrusion (23, 25), qui s'étendent entre des arêtes de bord (27, 31 et 29, 33) opposées les unes aux autres, s'étendent de manière parallèle les uns par rapport aux autres, et/ou les rubans d'enveloppe d'extrusion (23, 25), qui se répandent au niveau d'arêtes de bord (27, 29, 31, 33) adjacentes les unes aux autres, s'étendent les uns par rapport aux autres sensiblement en angle droit.

8. Panneau en mousse selon l'une quelconque des revendications 1 à 7,
**caractérisé en ce que** les surfaces de contact (7) tournées les unes vers les autres des panneaux en mousse (3, 5) sont reliées les unes aux autres par endroits ou sur toute la surface au moyen d'un matériau adhésif (9).

9. Panneau en mousse selon au moins l'une quelconque des revendications précédentes,
**caractérisé en ce que** les panneaux en mousse (3, 5) sont reliés les uns aux autres par l'intermédiaire de leurs rubans d'enveloppe d'extrusion (23, 25) réalisés au niveau des surfaces de contact (7).

10. Panneau en mousse selon l'une quelconque des revendications 1 à 9,
**caractérisé en ce que** les surfaces de contact (7) des panneaux en mousse (3, 5) sont reliées les unes aux autres par l'intermédiaire de leurs zones de surface (13, 15, 17) sans enveloppe d'extrusion.

11. Panneau en mousse selon l'une quelconque des revendications 1 à 10,
**caractérisé en ce que** les zones de surface (13, 15, 17) sans enveloppe d'extrusion des surfaces de contact (7) sont réalisées par le retrait de l'enveloppe d'extrusion (11).

12. Panneau en mousse selon l'une quelconque des revendications 6 - 11,
**caractérisé en ce que** les rubans d'enveloppe d'extrusion (23, 25) présentent une largeur, qui se situe dans une plage comprise entre 2 et 20 cm, de manière préférée entre 5 et 10 cm.

13. Panneau en mousse selon l'une quelconque des revendications 6 - 12,
**caractérisé en ce que** des rubans d'enveloppe d'extrusion (23, 25) adjacents les uns aux autres présentent les uns par rapport aux autres une distance située dans la plage allant de 5 à 20 cm, de préférence de 5 à 10 cm.

14. Panneau en mousse selon l'une quelconque des revendications précédentes,
**caractérisé en ce que** les zones de surface (13, 15, 17) sans enveloppe d'extrusion présentent, par rapport à la surface totale d'une surface de contact (7) d'un panneau en mousse (3, 5), un rapport situé dans la plage allant de 20 à 80 %, de manière préférée allant de 30 à 60 %.

15. Panneau en mousse, qui est réalisé au moins à partir de deux panneaux en mousse (3, 5) reliés les uns aux autres au moyen d'un matériau adhésif selon l'une quelconque des revendications 1 à 14,
**caractérisé en ce que** le matériau adhésif contient au moins des composants suivantes :
- un ou plusieurs matériaux de support,
- un ou plusieurs polymères, et
- des microsphères de polymère creuses, de préférence en tant qu'agent moussant.

16. Panneau en mousse selon la revendication 15,
**caractérisé en ce que** le matériau de support contient un solvant organique, qui est choisi parmi le groupe constitué de : acétate d'éthyle, acétate de butyle, toluène, carbonates et leurs mélanges, dans lequel le solvant comprend de manière préférée entre 50 et 90 % par rapport à la quantité totale du matériau adhésif,
et/ou que le matériau de support contient des monomères réactifs, qui sont choisis parmi le groupe constitué de styrène, α-méthylstyrène, méthacrylate de méthyle et leurs mélanges, dans lequel les monomères réactifs présentent entre 2 et 20 % par rapport à la quantité totale du matériau adhésif.

17. Panneau en mousse selon l'une quelconque des revendications 15 et 16,
**caractérisé en ce que** le polymère est choisi de préférence parmi le groupe constitué de : polystyrène, PMMA, SBS, ABS et leurs mélanges, dans lequel le polymère présente une quantité comprise entre de manière préférée 5 et 35 % par rapport à la quantité totale du matériau adhésif.

18. Panneau en mousse selon l'une quelconque des revendications 15 à 17,
**caractérisé en ce que** le matériau adhésif contient en supplément un catalyseur, de préférence choisi parmi le groupe des peroxydes, dans lequel le catalyseur représente entre 0,01 et 0,5 % par rapport à la quantité totale du matériau adhésif.

19. Panneau en mousse selon l'une quelconque des revendications 15 à 18,
**caractérisé en ce que** la colle contient en supplément un agent retardateur de flammes, de préférence choisi parmi le groupe constitué de HBCD et de tétrabromobisphénol, dans lequel l'agent retardateur de flammes présente une quantité située dans la plage entre 1 et 4 % par rapport à la quantité totale du matériau adhésif.

20. Panneau en mousse selon l'une quelconque des revendications 15 et 19,
**caractérisé en ce que** la colle contient des microsphères de polymère creuses, qui présentent une quantité comprise dans la plage entre 1 et 6 % par rapport à la quantité totale du matériau adhésif, de manière préférée entre 1 et 4 %.

21. Panneau en mousse selon l'une quelconque des revendications 1 à 20,
**caractérisé en ce que** les deux panneaux en mousse (3, 5) reliés l'un à l'autre sont réalisés à partir de matériaux, qui se distinguent du point de vue de leurs propriétés de matière et/ou propriétés mécaniques.

22. Panneau en mousse (3, 5) servant à fabriquer un panneau en mousse à deux couches, fabriqué en particulier au moyen d'un procédé d'assemblage, en particulier servant à fabriquer un panneau en mousse (1) selon l'une quelconque des revendications 1 à 21, avec une forme de base sensiblement carrée avec plusieurs surfaces,
dans lequel au moins une des surfaces (7) de manière préférée planes présente des zones de surface (13, 15, 17), lesquelles sont respectivement dépourvues de leur enveloppe d'extrusion apparaissant lors de la fabrication des deux panneaux en mousse (3, 5), et présente des zones de surface avec une enveloppe d'extrusion (11),
**caractérisé en ce que** la surface (7) prévue en tant que surface de contact du panneau en mousse (3, 5) présente des zones de bord (19, 21) pourvues respectivement d'une enveloppe d'extrusion (11), lesquelles sont réalisées en périphérie.

23. Procédé servant à fabriquer un panneau en mousse multicouche, en particulier un panneau en mousse (1) selon l'une quelconque des revendications 1 à 21, à partir d'au moins deux panneaux en mousse (3, 5) fins à relier les uns aux autres, comprenant les étapes de :
- mise à disposition de deux panneaux en mousse (3, 5) fins faisant office de panneaux de départ,
- production d'une surface de contact (7) au niveau d'au moins un des panneaux en mousse (3, 5) fins par retrait seulement partiel de l'enveloppe d'extrusion (11) au niveau d'au moins une surface sensiblement plane des panneaux en mousse (3, 5), dans lequel les surfaces de contact (7) des panneaux en mousse (3, 5) présentent des zones de bord (19, 21) respectivement pourvues d'une enveloppe d'extrusion (11), lesquelles sont réalisées en périphérie,
- application d'un matériau adhésif (9) sur au moins une surface de contact (7) des panneaux en mousse (3, 5) fins à relier les uns aux autres, et
- mise en appui entre elles des surfaces de contact (7) et assemblage des surfaces de contact (7), pourvues de manière préférée respectivement de zones de surface (13, 15, 17) sans enveloppe d'extrusion, des panneaux en mousse (3, 5) fins en un panneau en mousse (1) épais multicouche.

24. Procédé selon la revendication 23,
comprenant une, plusieurs ou toutes les étapes de :
- production de zones de surface (13, 15, 17) sans enveloppe d'extrusion séparées les unes des autres au niveau des surfaces de contact (7) à amener en appui les unes avec les autres des panneaux en mousse (3, 5) fins,
- production d'un agencement réparti de manière homogène des zones de surface (13, 15, 17) sans enveloppe d'extrusion au niveau des surfaces de contact (7) ,
- production de zones de surface (13, 15, 17) sans enveloppe d'extrusion séparées les unes des autres et de rubans d'enveloppe d'extrusion (23, 25) s'étendant entre les zones de surface sans enveloppe d'extrusion,
- application du matériau adhésif (9) sur les zones de surface avec une enveloppe d'extrusion (11) de la surface de contact (7) d'au moins un panneau en mousse (3, 5),
- application du matériau adhésif (9) sur les zones de surface (13, 15, 17) sans enveloppe d'extrusion de la surface de contact (7) d'au moins un panneau en mousse (3, 5).
